(19) Europäisches Patentamt
European Patent Office
Office européen des brevets

(11) Veröffentlichungsnummer: **0 185 873 B1**

# (12) EUROPÄISCHE PATENTSCHRIFT

(45) Veröffentlichungstag der Patentschrift: **04.09.91**

(51) Int. Cl.$^5$: **C08L 33/06**, C08F 2/44

(21) Anmeldenummer: **85113230.8**

(22) Anmeldetag: **18.10.85**

## (54) Giessharze auf Basis von Acrylsäureestern.

(30) Priorität: **22.12.84 DE 3447114**

(43) Veröffentlichungstag der Anmeldung:
**02.07.86 Patentblatt 86/27**

(45) Bekanntmachung des Hinweises auf die Patenterteilung:
**04.09.91 Patentblatt 91/36**

(84) Benannte Vertragsstaaten:
**CH DE FR GB IT LI NL**

(56) Entgegenhaltungen:
**EP-A- 0 101 541**
**EP-A- 0 107 764**
**US-A- 4 221 697**

(73) Patentinhaber: **HÜLS AKTIENGESELLSCHAFT**
**Paul-Baumann-Strasse 1**
**W-4370 Marl 1(DE)**

(72) Erfinder: **Bernhardt, Günther, Dr.**
**Rheinstrasse 33**
**W-5205 St. Augustin(DE)**
Erfinder: **Hanisch, Horst, Dr.**
**Fröbelweg 19**
**W-5202 Hennef(DE)**

**EP 0 185 873 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist die Verwendung von fließfähigen, härtbaren Acryl- und Methacrylsäureestern, die als Haftvermittler polymere Organosiliciumverbindungen enthalten, und feinteiligen anorganischen Füllstoffen als Gießharze.

Es ist bekannt, Gießharzen auf Basis von härtbaren Acryl- und Methacrylsäureestern, die im folgenden auch als ungesättigte Gießharze bezeichnet werden, anorganische Füllstoffe unterzumischen. Es sind weiterhin auch solche Gießharze bekannt, die die anorganischen Füllstoffe in Anteilen über 50 % enthalten, wobei diese Füllstoffe besonders feinteilig sein sollen. Bei den zuletzt genannten Gießharzen ist u.a. auch die Verwendung von monomeren Organosilanen als Haftvermittler bereits beschrieben (vgl. DE-PS 24 49 656). Diese bekannten, feinteilige Füllstoffe enthaltenden Gießharze haben gegenüber ungefüllten, ungesättigten Gießharzen höhere Dichten, eine höhere Härte und verbesserte Steifigkeit.

Weiterhin setzen die anorganischen Füllstoffe die Erwärmung der Harze während der Aushärtung sowie ihre Schrumpfung herab.

Der hohe Anteil an feinteiligen Füllstoffen, die unter Mitverwendung von monomeren Organosilanen als Haftvermittler gleichmäßig verteilt in diesen Gießharzen vorliegen, erhöht die Biegefestigkeit und Schlagzähigkeit der aus diesen Harzen hergestellten Formkörper. Zu den Formkörpern, die aus diesen bekannten ungesättigten Gießharzen hergestellt werden, zählen u. a. Sanitärartikel, z. B. Spülen oder Waschbecken.

Bei der Herstellung dieser Formkörper soll das ungesättigte Gießharz eine möglichst geringe Viskosität besitzen, damit beim Füllen der Formen diese möglichst formgenau ausgefüllt und der notwendige Füllgrad erhalten werden kann. Aufgrund des hohen Anteils an Füllstoffen wird diese Forderung von vielen ungesättigten Gießharzen nicht erfüllt. Auch durch den Zusatz von monomeren Organosiliciumverbindungen kann dieses Problem nicht gelöst werden; einige Organosiliciumverbindungen bewirken sogar noch eine zusätzliche Erhöhung der Viskosität.

Es ist auch bereits aus der DE-OS 33 31 371 bekannt, daß monomere und polymere Organosiliciumverbindungen im Gemisch mit Metallsäureestern von Metallen der IV. oder V. Nebengruppe des Periodensystems der Elemente eine Viskositätsabsenkung der Massen gemäß DE-PS 24 49 656 bewirken. Gleichzeitig ergibt dieses System auch eine Verbesserung der mechanischen Eigenschaften.

Es bestand die Aufgabe, das in der DE-OS 33 31 371 genannte Haftvermittler-System aus Organosiliciumverbindungen und Metallsäureestern weiter zu verbessern, wobei möglichst eine zusätzliche Viskositätsabsenkung angestrebt wird. Die dabei erhaltenen Gießharze sollen gleichzeitig aber auch die bekannten guten physikalischen Werte der Gießharze aus dem Stand der Technik beibehalten und wenn möglich auch noch verbessern.

In Erfüllung dieser Aufgabe wurde gefunden, daß fließfähige, härtbare Acryl- und Methacrylsäureester, die als haftvermittelnde Organosiliciumverbindungen Umsetzungsprodukte aus Salzen der (Meth)acrylsäure mit Copolymerisaten aus

a) Vinylchloracetat und

b) Alkoxysilylverbindungen mit einem Vinyl- oder Methacryloxyproplyrest

und weiteren, nicht funktionellen Grundbausteinen mit ethylenisch ungesättigten Gruppierungen enthalten, wobei in dem Umsetzungsprodukt aus den Salzen der (Meth)acrylsäure mit den Copolymerisaten als weiterer, nicht funktioneller Grundbaustein mit einer ethylenisch ungesättigten Gruppierung ein solcher der allgemeinen Formel

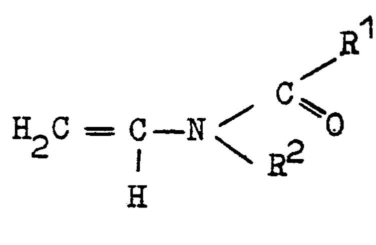

einpolymerisiert ist, in der $R^1$ für $C_1$- bis $C_3$-Alkylgruppen, $R^2$ für $C_1$- bis $C_4$-Alkylgruppen steht oder $R^1$ und $R^2$ gemeinsamer Bestandteil einer Gruppierung $-(CH_2)_n-$ ist, n = 3 bis 5 sein kann und der Ring zwischen 2 C-Atomen durch ein Sauerstoffatom unterbrochen sein kann, und feinteilige anorganische Füllstoffe als Gießharze verwendet werden können.

Trotz Abwesenheit der in der DE-OS 33 31 371 genannten Metallsäureester wird bei der erfindungsgemäßen Verwendung der polymeren Haftvermittler eine Herabsetzung der Viskosität der Gießharze erreicht

unter Beibehaltung der guten physikalischen Werte der ausgehärteten Harze.

Die erfindungsgemäß eingesetzten ungesättigten Gießharze besitzen im unausgehärteten Zustand Viskositäten, die teilweise noch niedriger sind als die Viskositäten der analogen Gießharze mit Zusatz des in der DE-OS 33 31 371 beanspruchten Haftvermittler-Systems. Bei der Herstellung der erfindungsgemäß verwendeten Gießharze entfällt also die zusätzliche Zubereitung eines Haftvermittler-Systems, weil nur eine einzige Organosiliciumverbindung hinzugegeben zu werden braucht.

Die einzusetzende Menge an polymerer Organosiliciumverbindung ist sehr gering. Sie wird praktischerweise auf das in dem Gießharz enthaltene Füllmittel bezogen, dessen Gehalt in weiten Grenzen variierbar ist. Die polymere Organosiliciumverbindung wird im allgemeinen in Mengen zwischen 0,1 und 4 Gew.-%, vorzugsweise zwischen 0,2 und 2 Gew.-%, bezogen auf das Füllmittel, eingesetzt.

Die erfindungsgemäß verwendeten haftvermittelnden polymeren Organosiliciumverbindungen mit mehreren ungesättigten Gruppierungen sind Copolymere aus mehreren ethylenisch ungesättigten Verbindungen. Sie enthalten mindestens drei verschiedene Grundbausteine, die sich von ethylenisch ungesättigten Monomeren ableiten, mit jeweils zwei Ketten-C-Atomen, wobei einer der Grundbausteine mit einer Alkoxysilylgruppierung verknüpft ist, die entweder direkt oder über eine

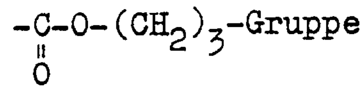

mit diesem Grundbaustein verbunden ist; der zweite Grundbaustein enthält einen α-Halogencarbonsäurerest, dessen Halogenatom durch einen Acryl- oder Methacrylsäurerest substituiert ist. Der dritte Grundbaustein aus ethylenisch ungesättigten Gruppierungen enthält keine funktionellen Gruppen. Er ist als Monomeres durch die allgemeine Formel

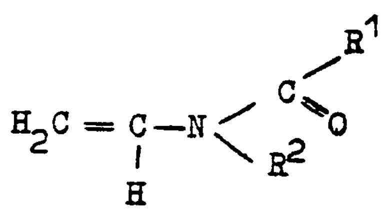

charakterisiert, in der $R^1$ für $C_1$- bis $C_3$-Alkylgruppen,$R^2$ für $C_1$- bis $C_4$-Alkylgruppen steht oder $R^1$ und $R^2$ gemeinsamer Bestandteil einer Gruppierung $-(CH_2)_n-$ist, n = 3 bis 5 sein kann und der Ring zwischen 2 C-Atomen durch ein Sauerstoffatom unterbrochen sein kann. Wenn in dieser Formel $R^1$ und $R^2$ gemeinsamer Bestandteil einer Gruppierung $-(CH_2)_n-$ ist, dann ist das tertiäre Stickstoffatom gemeinsamer Bestandteil eines Ringes, in dem in α-Stellung zu diesem tertiären Stickstoffatom eine Carbonylgruppe steht. Unter diese Formel fallen Vinylsäureamide mit tertiärem Stickstoffatom, wie z. B. N-Vinylpyrrolidon, N-Vinylmethylacetamid oder N-Vinyl-1,3-oxazidinon.

Der Anteil der einzelnen Grundbausteine in dem Copolymerisat kann in weiten Grenzen variiert werden: Der Grundbaustein mit dem Acrylatrest kann in Anteilen zwischen 0,5 bis 20 Gew.-Teilen, derjenige mit dem Silylrest in Anteilen zwischen 0,5 und 30 Gew.-Teilen einpolymerisiert enthalten sein. Der auf 100 Gew.-Teile aufzufüllende Rest entfällt auf den nicht funktionalisierten Baustein aus einer ethylenisch ungesättigten Gruppierung, wobei ggf. der Anteil des nachfolgend genannten Carbonsäurevinyl- bzw. (Meth)acrylsäureesters abgezogen werden muß. Das haftvermittelnde Copolymerisat kann zusätzlich noch Vinylester von $C_1$-bis $C_4$-Carbonsäuren oder (Meth)acrylsäureester einpolymerisiert enthalten. Der Anteil dieses Bestandteils in dem Copolymerisat kann zwischen 10 und 90 Gew.-Teilen variiert werden.

Die Herstellung der haftvermittelnden polymeren Organosiliciumverbindungen wird in der DE-OS 32 27 552 beschrieben, auf die hier besonders verwiesen wird.

Die Harzkomponente des erfindungsgemäß eingesetzten ungesättigten Gießharzes ist ein härtbares Acrylharz, wobei unter einem Acrylharz flüssige Polymere der, ggf. in α-Stellung methyl- oder ethylsubstituierten, Acrylsäureester verstanden werden sollen. Die Esterkomponente kann dabei von aliphatischen oder aromatischen Alkoholen mit 1 bis 18 Kohlenstoffatomen abgeleitet und ggf. durch ein Ethersauerstoffatom unterbrochen sein. Diese flüssigen Polymeren können ggf. ein weiteres festes, nicht mehr vernetzendes Polymeres aus der gleichen Gruppe gelöst oder dispergiert enthalten. Für mittelreaktive, bei der Härtung nicht vernetzende Harze ist das Methylmethacrylat der bevorzugte Ester. Hochreaktive, bei der Härtung

vernetzende Harze enthalten vernetzbare Bestandteile, wie Ethylenglykoldimethacrylat, weiterhin Methacrylate des Butendiols oder des Allylalkohols.

Solche Harze oder Harzgemische, die als Komponenten für Gießmassen eingesetzt werden können, sind an sich bekannt (vgl. DE-PS 24 49 656).

Die Härtung dieser Harze oder Harzgemische erfolgt ebenfalls auf an sich bekannte Weise, z. B. durch Zusatz von anorganischen Peroxiden und ggf. Aktivatoren oder Beschleunigern, je nachdem, ob die Härtung bei erhöhter Temperatur oder Raumtemperatur durchgeführt werden soll.

Die erfindungsgemäß eingesetzten Gießharze können auch noch monomere Organosilane zusätzlich enthalten. Bevorzugte Organosilane sind Glycidyloxypropyltrialkoxysilane; jedoch können auch Vinyl- oder Alkyltrialkoxysilane eingesetzt werden.

Das Gießharz enthält ferner Füllstoffe in Form von feinverteilten Partikelchen, deren Korngröße maximal 100 µm beträgt. Die bevorzugten Korngrößenbereiche liegen zwischen 0 bis 10, 0 bis 40 und 0 bis 60 µm; eine besonders gute Wirksamkeit zeigt das erfindungsgemäß eingesetzte Gemisch bei Füllstoffen im Korngrößenbereich zwischen 0 und 10 µm. Der Füllstoff kann natürlicher oder synthetischer Provenienz sein; er sollte eine dem Anwendungszweck angepaßte Härte besitzen. Füllstoffe natürlicher Provenienz sind z. B. Mineralien wie Aluminiumoxide, Doppeloxide des Aluminiums mit Alkali- und/oder Erdalkalimetallen, Siliciumdioxid in seinen verschiedenen Modifikationen, Silikate, Aluminosilikate, Calcit und andere Carbonate, Carbide, Oxide und Sulfide. Diese Stoffe können auch durch anschließende Verarbeitungsprozesse modifiziert sein. Als Beispiele für diese Füllstoffe seien genannt: Quarzmehl, Kaolin, Talkum, Glimmer, Tonerde, Zinkweiß, Kreide, Kalkstein, Dolomit, Gips, Blancfix und Aluminiumoxidhydrate. Beispiele für synthetisch hergestellte Füllstoffe sind Glasmehl, Schlackenasche, feinverteiltes synthetisches $SiO_2$.

Die erfindungsgemäß eingesetzten Gießharze enthalten mindestens 20 Gew.-% dieser Füllstoffe. Ihr Anteil kann maximal bei 80 Gew.-% liegen. Vorzugsweise liegt der Anteil der Füllstoffe in dem fertigen Gießharz zwischen 50 und 70 Gew.-%.

Die Mitverwendung eines Dispergiermittels, wie sie in der DE-PS 24 49 656 zur Herstellung der dort allgemein beschriebenen Gießharze zwingend vorbeschrieben ist, ist bei dem erfindungsgemäß verwendeten Gemisch nicht notwendig. Die Füllstoffe liegen in dem ungesättigten flüssigen Gießharz gleichmäßig verteilt, frei von Aggregation, vor, wenn dieses Harz ansonsten nach den bekannten Verfahren hergestellt wurde.

Wie die bekannten flüssigen, Füllstoffe enthaltenden Gießharze können die Gießharze zusätzlich zu den Füllstoffen noch faserförmige Verstärkerstoffe enthalten, die die Bedingungen der Feinkörnigkeit nicht zu erfüllen brauchen. Zu diesen Faserstoffen zählen beispielsweise Glasfasern, Steinfasern oder Asbest. Der Anteil dieser Verstärkerstoffe soll maximal jedoch nicht größer sein als der Anteil der feinkörnigen Füllstoffe.

Falls erwünscht, können die Gießharze mit Pigmenten und/oder Farbstoffen eingefärbt werden. Hierfür verwendet man vorteilhaft solche Produkte, die gegenüber Vergilbung, Verkokung und Vercrackung beständig sind. Beispielhaft seien genannt: Eisenoxide, Titandioxid, Blancfix, Zinkweiß, Ultramarinblau und Ruß.

Die Herstellung der erfindungsgemäß eingesetzten flüssigen, härtbaren Gießharze erfolgt in an sich bekannter Weise, wie sie z. B. in der DE-PS 24 49 656 beschrieben ist. Im allgemeinen wird zuerst der nicht funktionelle Grundbaustein dem flüssigen ungesättigten Harz untergemischt, und anschließend werden die Füllstoffe und ggf. die Verstärkerstoffe in das erhaltene Gemisch eindispergiert. Das vorgelegte Harz kann dabei bereits den Härtungskatalysator untergemischt enthalten, besonders wenn das Gießharz durch Wärmeeinwirkung ausgehärtet werden soll. Es ist jedoch zweckmäßig, den Härtungskatalysator und ggf. die Beschleuniger erst kurz vor dem Aushärten der Masse unterzumischen und daraufhin das gewünschte Gußstück herzustellen.

Von den erfindungsgemäß verwendeten Massen lassen sich beispielsweise Sanitärartikel, wie Waschbecken, Brausetassen, Spülen oder WC-Becken, oder Formkörper für die Bauindustrie, wie Maschinenfundamente, Maschinenbetten oder Behälter, herstellen.

Beispiel 1 (Herstellung der Gießmassen)

Es wurden mehrere Gießmassen jeweils in der gleichen Weise unter Verwendung eines ungesättigten polymeren Organosilans wie folgt hergestellt:

Es wurde jeweils ein Gemisch aus 105 g eines hochreaktiven Methacrylat-Harzes (Copolymer aus Methylacrylat/Acrylat mit Molekulargewicht zwischen 70 000 und 100 000, gelöst in Methylmethacrylat) mit 35 g Methylmethacrylat in einem Meßgefäß vorgelegt und in diese Lösung die in der Tabelle 1 genannten Mengen an ungesättigtem polymeren Organosilan eingemischt. Anschließend wurden unter Verwendung eines Körbchen-Rührers bei 2 000 U/min im Verlauf von ca. 10 Minuten zunächst 210 g eines Quarz-Feinmehls (Korngrößenbereich 0 bis 40 µm) und daraufhin 1,4 g Ultramarinblau-Pigment eindispergiert.

In Tabelle 1 ist die Viskosität der erhaltenen Massen angegeben. Diese ist für die erfindungsgemäß verwendeten Massen geringer als für solche Massen, die Metallsäureester und ungesättigte monomere Organosilane oder Metallsäureester und andere ungesättigte polymere Organosilane gemäß der DB-A1-33 31 371 enthalten (Vergleichsbeispiele a) und b)).

Die Bestimmung der Viskosität erfolgte mit einem Brookfield-RV-Viskosimeter. Dazu wurden die einzelnen Proben jeweils auf 20 °C temperiert und nach den angegebenen Lagerzeiten ausgeprüft. Die Messungen erfolgten mit Spindel 5 bei 10 und 50 U/min.

Tabelle 1

Viskosität von pigmentierten Quarzmehl-Acrylatharzmischungen

| Probe Nr. | UPO 1 [Tle]x | UPO 2 [Tle]x | UPO 3 [Tle]x | UPO 4 [Tle]x | MEMO [Tle]x | UPO 5 [Tle]x | MEMIG [Tle]x | Viskosität [mPa.s] 10 U/min 2 h | 10 U/min 24 h | 50 U/min 2 h | 50 U/min 24 h |
|---|---|---|---|---|---|---|---|---|---|---|---|
| 1) | - | - | - | - | - | - | - | 11200 | 11200 | 5900 | 6000 |
| 2) | 0,5 | - | - | - | - | - | - | 2400 | 2600 | 2300 | 2700 |
| 3) | - | 0,5 | - | - | - | - | - | 2300 | 2700 | 2000 | 2500 |
| 4) | - | - | 0,5 | - | - | - | - | 2500 | 3000 | 2500 | 3000 |
| 5) | - | - | - | 0,5 | - | - | - | 2200 | 2500 | 2100 | 2500 |
| Vergleichsbeispiele | | | | | | | | | | | |
| a) | - | - | - | - | 0,4 | - | 0,1 | 6800 | 5200 | 5000 | 4000 |
| b) | - | - | - | - | - | 0,4 | 0,1 | 4200 | 3600 | 3800 | 3700 |

x bez. auf 100 Tle Füllstoff

Erläuterungen zu Tabelle 1:

UPO = ungesättigtes polymeres Organosilan

UPO 1 = Umsetzungsprodukt aus Natriumacrylat und einem Polymerisat, das hergestellt wurde aus

15 Gew.-Teilen Vinyltriethoxysilan
20 Gew.-Teilen Vinylpyrrolidon
5 Gew.-Teilen Vinylchloracetat
60 Gew.-Teilen Vinylacetat

eingesetzt als ca. 45 %ige Lösung in Ethanol

UPO 2 = Umsetzungsprodukt aus Natriumacrylat und einem Polymerisat, das hergestellt wurde aus

15 Gew.-Teilen Vinyltriethoxysilan
30 Gew.-Teilen Vinylpyrrolidon
5 Gew.-Teilen Vinylchloracetat
50 Gew.-Teilen Vinylacetat

eingesetzt als ca. 45 %ige Lösung in Methylglykolacetat/Ethanol (3,1 : 1)-Gemisch

UPO 3 = Umsetzungsprodukt aus Natriumacrylat und einem Polymerisat, das hergestellt wurde aus

5 Gew.-Teilen Vinyltriethoxysilan
30 Gew.-Teilen Vinylpyrrolidon
5 Gew.-Teilen Vinylchloracetat
60 Gew.-Teilen Vinylacetat

eingesetzt als ca. 45 %ige Lösung in Ethanol

UPO 4 = Umsetzungsprodukt aus Natriumacrylat mit einem Polymerisat, das hergestellt wurde aus

15 Gew.-Teilen Vinyltriethoxysilan
30 Gew.-Teilen Vinylmethylacetamid
5 Gew.-Teilen Vinylchloracetat
50 Gew.-Teilen Vinylacetat

eingesetzt als 45 %ige Lösung in Toluol/Ethanol (3,2 : 1)-Gemisch

UPO 5 = Umsetzungsprodukt aus Natriumacrylat und einem Polymerisat, das hergestellt wurde aus

5 Gew.-Teilen Vinyltrimethoxysilan
5 Gew.-Teilen Vinylchloracetat
90 Gew.-Teilen Vinylacetat

eingesetzt als ca. 45 %ige Lösung in Toluol

MEMO = γ-Methacryloxypropyltrimethoxysilan

MEMIG = Mischung aus 1 Mol Titanbutylat und 4 Mol Acetessigester

Beispiel 2 (erfindungsgemäße Verwendung)

In die Proben des Beispiels 1 wurden nach einer Entlüftungszeit von etwa 16 Stunden jeweils 0,7 g eines für das Acrylharz spezifischen Peroxydkatalysators und eines Aktivators eingerührt und aus dem Gemisch Platten der Abmessungen 200 x 200 x 4 mm gegossen. Die Platten härteten innerhalb 20 Minuten aus. Anschließend wurden sie noch 14 Stunden bei 80 °C nachgehärtet.

Zur Bestimmung der Biegefestigkeit und Schlagzähigkeit wurden aus den erhaltenen Platten Normkörper der Abmessungen 50 x 6 x 4 mm ausgesägt. Die physikalischen Werte dieser Prüfkörper sind in Tabelle 2 angegeben.

Tabelle 2

| Probe Nr. x | | Biegefestigkeit [N/mm²] DIN 53452 Direkt | nach 6 h Kochen | Schlagzähigkeit [kJ/m²] DIN 53453 Direkt | nach 6 h Kochen |
|---|---|---|---|---|---|
| 1 | o-Probe | 67 | 54 | 2,0 | 1,6 |
| 2 | erfindungsgemäß | 113 | 116 | 5,2 | 5,2 |
| 3 | erfindungsgemäß | 102 | 108 | 4,6 | 4,2 |
| 4 | erfindungsgemäß | 105 | 105 | 4,8 | 4,1 |
| 5 | erfindungsgemäß | 124 | 110 | 4,8 | 4,2 |
| a | Vergleichsbeispiel | 92 | 111 | 2,8 | 4,2 |
| b | Vergleichsbeispiel | 100 | 103 | 4,4 | 4,4 |

x siehe Tabelle 1

Die physikalischen Werte der Produkte aus erfindungsgemäß eingesetzten Massen sind demzufolge denen der in der DE-A1 33 31 371 genannten nicht unterlegen bzw. teilweise sogar noch besser.

## Patentansprüche

1. Verwendung von fließfähigen, härtbaren Acryl- und Methacrylsäureestern, die als haftvermittelnde polymere Organosiliciumverbindungen Umsetzungsprodukte aus Salzen der (Meth)acrylsäure mit Copolymerisaten aus
   a) Vinylchloracetat und
   b) Alkoxysilylverbindungen mit einem Vinyl- oder Methacryloxypropylrest

   und weiteren, nicht funktionellen Grundbausteinen mit ethylenisch ungesättigten Gruppierungen enthalten, wobei in dem Umsetzungsprodukt aus den Salzen der (Meth)acrylsäure mit den Copolymerisaten als weiterer, nicht funktioneller Grundbaustein mit einer ethylenisch ungesättigten Gruppierung ein solcher der allgemeinen Formel

   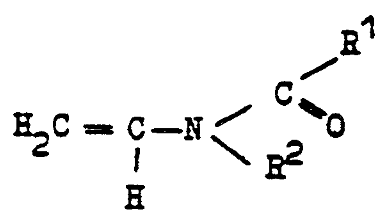

   einpolymerisiert ist, in der $R^1$ für $C_1$- bis $C_3$-Alkylgruppen, $R^2$ für $C_1$- bis $C_4$-Alkylgruppen steht oder $R^1$ und $R^2$ gemeinsamer Bestandteil einer Gruppierung $-(CH_2)_n-$ ist, n = 3 bis 5 sein kann und der Ring zwischen 2 C-Atomen durch ein Sauerstoffatom unterbrochen sein kann, und mindestens 20 Gew.-% feinteiligen anorganischen Füllstoffen als Gießharze.

2. Verwendung von Acryl- und Methacrylsäureestern gemäß Anspruch 1, dadurch gekennzeichnet, daß

die haftvermittelnde polymere Organosiliciumverbindung als nicht funktionellen Grundbaustein mit einer ethylenisch ungesättigten Gruppe N-Vinylpyrrolidon oder N-Vinylacetamid einpolymerisiert enthält.

3. Verwendung von Acryl- und Methacrylsäureestern gemäß Ansprüchen 1 oder 2, dadurch gekennzeichnet, daß die haftvermittelnde polymere Organosiliciumverbindung als nicht funktionelle Grundbausteine zusätzlich noch Vinylester von $C_1$- bis $C_4$-Carbonsäuren oder (Meth)acrylsäureester einpolymerisiert enthält.

4. Verwendung von Acryl- und Methacrylsäureestern gemäß einem der Ansprüche 1 bis 3, dadurch gekennzeichnet, daß die haftvermittelnde polymere Organosiliciumverbindung in Anteilen von 0,2 bis 4 Gew.-%, vorzugsweise 0,4 bis 1,2 Gew.-%, bezogen auf den Anteil der Füllstoffe, enthalten ist.

**Claims**

1. Use, as casting resins, of flowable, hardenable acrylic and methacrylic acid esters which contain, as polymeric organosilicon compounds bringing about adhesion, reaction products of salts of (meth) acrylic acid with co-polymers of
   a) vinyl chloroacetate and
   b) alkoxysilyl compounds with a vinyl or methacryloxypropyl residue

   and further non-functional basic components with ethylenically unsaturated groupings, wherein there is polymerised in the reaction product of the salts of (meth)acrylic acid with the co-polymers as further non-functional basic components with an ethylenically unsaturated grouping, one such component of the general formula

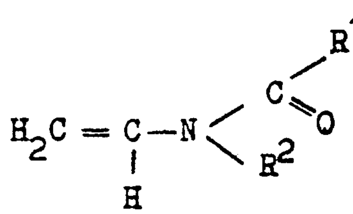

   in which $R^1$ stands for $C_1$ to $C_3$ alkyl groups, $R^2$ for $C_1$ to $C_4$ alkyl groups or $R^1$ and $R^2$ is common component of a grouping $-(CH_2)_n-$, n can be 3 to 5 and the ring can be interrupted between two C-atoms by an oxygen atom, and at least 20 wt-% of finely divided inorganic fillers.

2. Use of acrylic and methacrylic acid esters according to claim 1, characterised in that the polymeric organosilicon compound bringing about adhesion contains polymerised therein as non-functional basic unit with an ethylenically unsaturated group, N-vinylpyrrolidone or N-vinylacetamide.

3. Use of acrylic and methacrylic acid esters according to claims 1 or 2, characterised in that the polymeric organosilicon compound bringing about adhesion contains polymerised therein as non-functional basic units, in addition, vinyl esters of $C_1$ to $C_4$ carboxylic acids or (meth)-acrylic acid esters.

4. Use of acrylic and methacrylic esters according to one of claims 1 to 3, characterised in that the polymeric organosilicon compound bringing about adhesion is contained in amounts of 0.2 to 4 wt-%, preferably 0.4 to 1.2 wt-% related to the amount of the fillers.

**Revendications**

1. Utilisation d'esters durcissables, fluides, de l'acide acrylique et de l'acide méthacrylique, qui contiennent en tant que composés organiques du silicium, polymères et agents d'adhérence, des produits de la réaction de sels de l'acide (méth)acrylique avec des copolymères
   a) de chloracétate de vinyle et
   b) des composés alcoxysilyle comportant un résidu vinyle ou méthacryloxypropyle,

   et d'autres constituants non fonctionnels comportant des groupements à insaturation éthylénique, où, dans le produit de la réaction des sels de l'acide (méth)acrylique avec les copolymères, on introduit par polymérisation, en tant qu'autres constituants non fonctionnels comportant un groupement à

insaturation éthylénique, un constituant de ce genre de formule générale

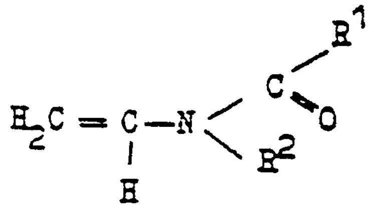

dans laquelle $R^1$ représente un groupe alkyle en $C_1$ à $C_3$, $R^2$ un groupe alkyle en $C_1$ à $C_4$, ou encore $R^1$ et $R^2$ forment le constituant commun d'un groupement $-(CH_2)_n-$, n peut valoir de 3 à 5, et le noyau peut être interrompu entre deux atomes de carbone par un atome d'oxygène, et au moins 20 % en poids de charges minérales finement divisées, en tant que résines de coulée.

**2.** Utilisation d'esters de l'acide acrylique et de l'acide méthacrylique selon la revendication 1, caractérisée en ce que le composé organique du silicium, polymère et agent d'adhérence contient, en tant que constituant non fonctionnel comportant un groupe à insaturation éthylénique, de la N-vinylpyrrolidone ou du N-vinylacétamide introduit par polymérisation.

**3.** Utilisation d'esters de l'acide acrylique et de l'acide méthacrylique selon les revendications 1 ou 2, caractérisée en ce que le composé organique du silicium, polymère et promoteur d'adhérence, contient en outre encore, en tant que constituants non fonctionnels, des esters vinyliques d'acides carboxyliques en $C_1$ à $C_4$ ou des esters de l'acide (méth)acrylique introduits par polymérisation.

**4.** Utilisation d'esters de l'acide acrylique et de l'acide méthacrylique selon l'une des revendications 1 à 3, caractérisée en ce que le composé organique du silicium, polymère et agent d'adhérence, est contenu en des quantités de 0,2 à 4, de préférence de 0,4 à 1,2 % en poids par rapport à la quantité de charges présentes.